# EUROPEAN PATENT APPLICATION

(11) **EP 1 885 121 A2**
(43) Date of publication of application: **06.02.2008**
(21) Application number: 06126729.0
(22) Date of filing: 20.12.2006
(51) Int. Cl.: H04N 5/44, H04N 5/50

(54) **Method and apparatus for searching digital channel**

(30) Priority: 21.06.2006 KR 20060055961
(71) Applicant: Samsung Electronics Co., Ltd., Suwon-si 442-742 Gyeonggi-do (KR)
(72) Inventor: Lee, Young-jin, Incheon (KR)
(74) Representative: Robinson, Ian Michael

(57) **Abstract**

Provided are a method and an apparatus for searching a digital channel. The method includes: checking an accuracy of information regarding a digital broadcast signal of a broadcast signal; and determining whether a channel through which the broadcast signal is received is a digital channel through which a digital signal is received, depending on the accuracy of the information regarding the digital broadcast signal. Thus, a time required to searching all channels to search for a digital channel can be considerably reduced, and an accuracy of the searched digital channel can be improved.

## Description

The present invention relates in general to a method and an apparatus for searching a digital channel, and more particularly, to a method and an apparatus for reducing a time required to search for a digital channel among all channels in a digital broadcast environment.

In general, a broadcast receiving apparatus supports receiving of analog and digital broadcasts. The analog and digital broadcast signals are received, using a combined tuner or received by separate analog and digital tuners, according to a selection of a user channel. Examples of such broadcast receiving apparatus generally include settop boxes, digital televisions (DTVs), etc.

Such a digital broadcast receiving apparatus is also capable of performing searches for analog and digital broadcast channels during an initial setup procedure or as an automatic channel search. However, a large amount of time is required to search all channels in a digital broadcast environment due to the proliferation of digital broadcast services.

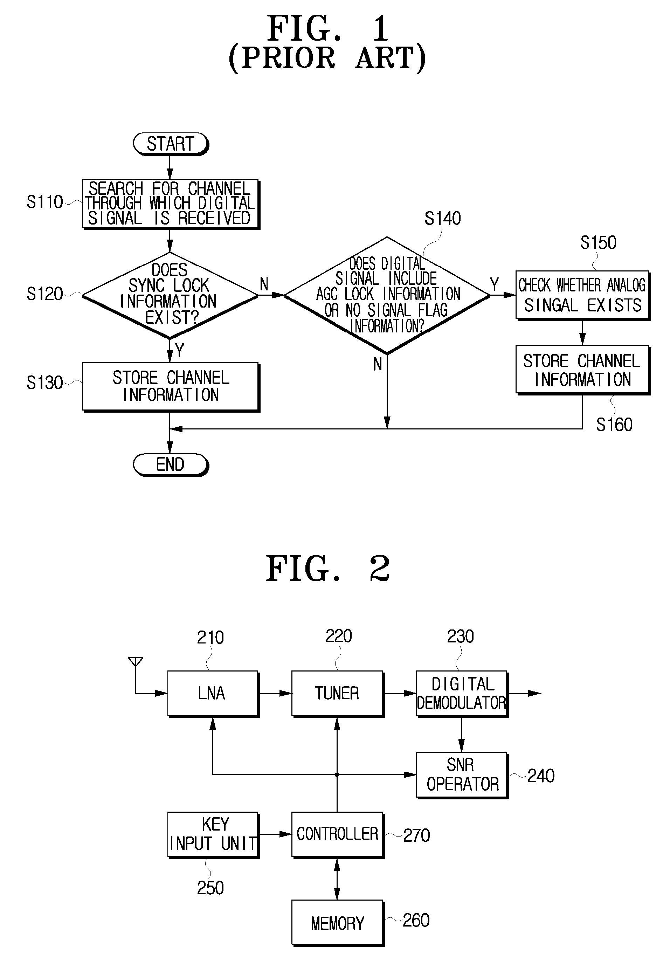

Figure 1 is a flowchart illustrating a method of searching for a digital channel according the related art. Referring to Figure 1, in operation S110, a digital broadcast receiving apparatus searches for a channel through which a digital signal of a received broadcast signal is received, i.e., a digital channel. In operation S120, the digital broadcast receiving apparatus reads sync information from the received broadcast signal to determine whether a sync signal is locked.

If it is determined in operation S120 that the sync signal is locked, the digital broadcast receiving apparatus determines that the digital signal is received through the corresponding channel, determines that the corresponding channel is a digital channel, and stores information regarding the corresponding channel in operation S130.

If it is determined in operation S120 that the sync signal is not locked, the digital broadcast receiving apparatus determines whether the digital signal includes automatic gain control (AGC) Lock information or No signal Flag information. Here, the No signal Flag information varies depending on the AGC Lock information. If it is determined in operation S140 that the broadcast signal includes the AGC Lock information or the No signal Flag information, the conventional digital broadcast receiving apparatus checks whether an analog signal exists in operation S150.

If it is determined in operation S150 from the AGC Lock information or the No signal Flag information that the analog signal is received through the corresponding channel, the conventional digital broadcast receiving apparatus determines the corresponding channel as an analog channel and stores information regarding the corresponding channel in operation S160.

Accordingly, a determination is made as to whether information regarding analog and digital channels exits to simultaneously search for the analog and digital channels. Thus, a large amount of time is required to search all channels. Also, information used for determining whether a corresponding channel is a digital channel is sometimes unreliable. Thus, an accuracy of determining whether a searched channel is a digital channel is low. In addition, noise is not considered when a broadcast signal is received. Thus, an accuracy of a signal received through the searched channel may be low.

The exemplary embodiments of the present invention address at least some the above problems and/or disadvantages and may provide at least some of the advantages described below.

According to the present invention there is provided an apparatus and method as set forth in the appended claims. Preferred features of the invention will be apparent from the dependent claims, and the description which follows.

An exemplary aspect of the present invention provides a method and an apparatus for reducing a time required to search for a digital channel among all channels and improving an accuracy of determining the digital channel.

According to an aspect of the present invention, there is provided a method of searching for a digital channel, including: checking an accuracy of information regarding a digital broadcast signal of a broadcast signal; and determining whether a channel through which the broadcast signal is received is a digital channel through which a digital signal is received, depending on the accuracy of the information regarding the digital broadcast signal.

The information regarding the digital broadcast signal may be transmission parameter signaling (TPS) information.

The checking of the accuracy of the information regarding the digital broadcast signal of the broadcast signal may include checking whether TPS information is locked.

If a predetermined number of carriers carrying the TPS information are sequentially received within a predetermined period of time, it may be determined that the TPS information is locked.

The predetermined period of time may be a time required to read the TPS information and check whether the TPS information is locked and is arbitrarily set.

If it is determined that the accuracy of the information regarding the digital broadcast signal is high, it may be determined that the channel through which the broadcast signal is received is the digital channel through which the digital signal is received.

If it is determined that the TPS information is locked, it may be determined that the accuracy of the information regarding the digital broadcast signal is high.

The method may further include storing information regarding the channel determined as the digital channel if it is determined that the channel through which the broadcast signal is received is the digital channel through which the digital signal is received.

When the broadcast signal is received, a low noise amplifier (LNA) may be turned off.

The method may further include: if it is determined that the channel through which the broadcast signal is received is the digital channel, computing a signal-to-noise ratio (SNR) of the digital channel; determining whether the SNR is within a predetermined range; and storing information regarding the channel determined as the digital channel depending on whether the SNR is within the predetermined range.

The predetermined range may be a range which is to determine a noise degree of the channel determined as the digital channel and is arbitrarily set.

If it is determined that the SNR is within the predetermined range, the LNA may operate to remove noise from the channel determined as the digital channel and stores the information regarding the channel determined as the digital channel.

According to another aspect of the present invention, there is provided a digital broadcast receiving apparatus including: a digital demodulator demodulating a broadcast signal; and a controller checking an accuracy of information regarding a digital broadcast signal of the demodulated broadcast signal and determining whether a channel through which the broadcast signal is received is a digital channel through which a digital signal is received, depending on the accuracy of the information regarding the digital broadcast signal.

The information regarding the digital broadcast signal may be TPS information.

The controller may check whether the TPS information is locked to check the accuracy of the information regarding the digital broadcast signal.

If a predetermined number of carriers carrying the TPS information are sequentially received within a predetermined period of time, the controller may determine that the TPS information is locked.

The predetermined period of time may be a time required to read the TPS information and check whether the TPS information is locked and is arbitrarily set.

If it is determined that the accuracy of the information regarding the digital broadcast signal is high, the controller may determine that the channel through which the broadcast signal is received is the digital channel through which the digital signal is received.

If it is determined that the TPS information is locked, the controller may determine that the accuracy of the information regarding the digital broadcast signal is high.

The digital broadcast receiving apparatus may further include a memory, wherein the controller stores information regarding the channel determined as the digital channel if it is determined that the channel through which the broadcast signal is received is the digital channel through which the digital signal is received.

The digital broadcast receiving apparatus may further include an LNA removing noise from the broadcast signal, wherein when the broadcast signal is received, the controller turns off the LNA.

The digital broadcast receiving apparatus may further include an SNR operator computing an SNR of the digital channel if it is determined that the channel through which the broadcast signal is received is the digital channel, wherein the controller stores information regarding the channel determined as the digital channel depending on whether the SNR is within a predetermined range.

The predetermined range may be a range which is to determine a noise degree of the channel determined as the digital channel and is arbitrarily set.

If it is determined that the SNR is within the predetermined range, the controller may operate the LNA to remove noise from the channel determined as the digital channel and stores the information regarding the channel determined as the digital channel.

The digital broadcast receiving apparatus may further include a tuner sequentially tuning broadcast signals receives through all channels, wherein the controller controls the tuner to tune the all channels when the LNA is turned off.

If it is determined that the channel through which the broadcast signal is received is the digital channel, the controller may control the tuner to tune a next channel.

The above aspects and features of the present invention will be more apparent by describing certain exemplary embodiments of the present invention with reference to the accompanying drawings, in which:
Figure 1 is a flowchart illustrating a method of searching for a digital channel according to the related art;
Figure 2 is a block diagram illustrating a digital broadcast receiving apparatus according to an exemplary embodiment of the present invention;
Figure 3 is a flowchart illustrating a method of searching for a digital channel of a digital broadcast receiving apparatus according to an exemplary embodiment of the present invention;
Figure 4 is a flowchart illustrating a method of searching a digital channel of a digital broadcast receiving apparatus according to another exemplary embodiment of the present invention;
Figure 5 is a flowchart illustrating a method of searching a digital channel of a digital broadcast receiving apparatus according to yet another exemplary embodiment of the present invention.

Throughout the drawings, the same drawing reference numerals will be understood to refer to the same elements, features, and structures.

Hereinafter, exemplary embodiments of the present invention will be described in detail with reference to the accompanying drawings.

Figure 2 is a block diagram illustrating a digital broadcast receiving apparatus according to an exemplary embodiment of the present invention. The digital broadcast receiving apparatus according to the present exemplary embodiment may receive both of analog and digital broadcasts and search for a digital broadcast channel among all channels in order during setting of an automatic digital channel. Here, the digital broadcast receiving apparatus uses information regarding a highly reliable digital broadcast signal to search for a digital channel so as to improve an accuracy of the searched digital channel. The digital broadcast receiving apparatus also improves the accuracy of a searched digital channel in consideration of noise of a received broadcast signal.

Referring to Figure 2, the digital broadcast receiving apparatus includes a low noise amplifier (LNA) 210, a tuner 220, a digital demodulator 230, a signal-to-noise ratio (SNR) operator 240, a key input unit 250, a memory 260, and a controller 270.

The LNA 210 amplifies a broadcast signal received through an antenna, whilst inhibiting the generation of noise during the amplification. The tuner 220 tunes a broadcast signal received through the antenna to select a particular channel frequency from amongst all of the channels in broadcast signal.

The digital demodulator 230 demodulates the broadcast signal at the channel frequency selected by the tuner 220. The SNR operator 240 computes an SNR of the broadcast signal as demodulated by the digital demodulator 230.

The key input unit 250 suitably includes a key through which an automatic digital setting command is input. The memory 260 stores information regarding a searched digital channel.

If the automatic digital channel setting command is input from the key input unit 250, the controller 270 searches for a digital channel among all channels and stores information regarding the located digital channel(s) in the memory 260.

In detail, the controller 270 searches for a digital channel through which the broadcast signal demodulated by the digital demodulator 230 is received. The controller 270 reads data of the demodulated broadcast signal to check whether transmission parameter signaling (TPS) information is locked.

The TPS information is a kind of information regarding a digital broadcast signal including transmission mode information, guard interval information, constellation pattern information, hierarchy information, code rate information, and the like and defined in detail in the specification ETSIEN 300744.

In other words, when a digital broadcast signal is received, TPS information as information regarding the digital broadcast signal is received. Here, checking whether the TPS information is locked is to determine an accuracy of the TPS information. If it is determined that the TPS information is locked, this means that the TPS information is highly reliable information.

If it is determined that the TPS information is locked, the controller 270 determines that a channel corresponding to the received broadcast signal is a channel through which a digital signal is received. If it is determined that the TPS information is not locked, the controller 270 determines that the channel corresponding to the received broadcast signal is not a channel through which a digital signal is received. Thus, an accuracy of locating a digital channel is improved.

If it is determined that the TPS information of the broadcast signal demodulated by the digital demodulator 230 is locked, the controller 270 controls the SNR operator 240 to compute an SNR of the demodulated broadcast signal.

Here, if it is determined that the SNR is within a predetermined range, for example, within a range between 0 and 155, the controller 270 controls the LNA 210 to be turned on so as to store information regarding a digital channel from which noise has been removed in the memory 260.

In the exemplary embodiments explained above, the digital broadcast receiving apparatus includes the low noise amplifier (LNA) 210, the tuner 220, the digital demodulator 230, the0 signal-to-noise ratio (SNR) operator 240, the key input unit 250, the memory 260, and the controller 270, to search a digital channel. However, alternative embodiments are also possible. For example, the digital broadcast receiving apparatus may have the construction including the digital demodulator 230, and the controller 270 to check the accuracy of the information regarding the digital broadcast signal contained in the demodulated broadcast signal, and then determine whether the digital signal is received through a digital channel or not according to the accuracy of the information regarding the digital broadcast signal. More specifically, the controller 270 may check whether the TPS information of the digital broadcast signal contained in the demodulated broadcast signal is locked, and if so, determine that the broadcast signal is received through the digital channel.

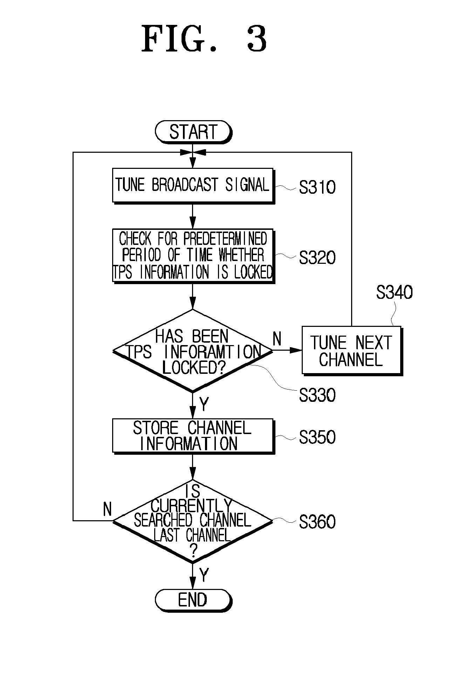

Figure 3 is a flowchart illustrating a method of searching for a digital channel in a digital broadcast receiving apparatus, according to an exemplary embodiment of the present invention. Referring to Figure 3, in operation S310, the tuner 220 tunes a broadcast signal having a frequency of a channel received through an antenna.

In operation S320, the controller 270 checks for a predetermined period of time whether TPS information of the broadcast signal demodulated by the digital demodulator 230 is locked. Here, the predetermined period of time is a time required to read the TPS information of the broadcast signal demodulated by the digital demodulator 230 and check whether the TPS information is locked and may be arbitrarily set.

In operation S330, the controller 270 determines whether the TPS information is locked. For example, if the predetermined period of time is 100ms, and a predetermined number of carriers carrying the TPS information, for example, five or more carriers, are sequentially received, the controller 270 determines that the TPS information is locked.

If it is determined in operation S330 that the TPS information is not locked, the controller 270 controls the tuner 220 to tune a next channel in operation S340. In detail, if it is determined that the TPS information of the demodulated broadcast signal is not locked, the controller 270 determines that reliability of the received TPS information is low and that the currently tuned channel is not a channel through which a digital signal is received. Thus, the controller 270 controls the tuner 220 to tune the next channel.

If it is determined in operation S330 that the TPS information is locked, the controller 270 stores information regarding the currently tuned channel in the memory 260 in operation S350. In detail, if it is determined that the TPS information of the demodulated broadcast signal is locked, the controller 270 determines that the reliability of the received TPS information is high and that the currently tuned channel is a channel through which a digital signal is received.

In operation S360, the controller 270 determines whether a currently searched channel is a last channel, i.e., all channels have been searched. If it is determined in operation S360 that the currently searched channel is not the last channel, the controller 270 repeats operations S310 through S350 to sequentially search for digital channels among the all channels in order. If it is determined in operation S360 that the currently searched channel is the last channel, the controller 270 ends the searching for digital channels.

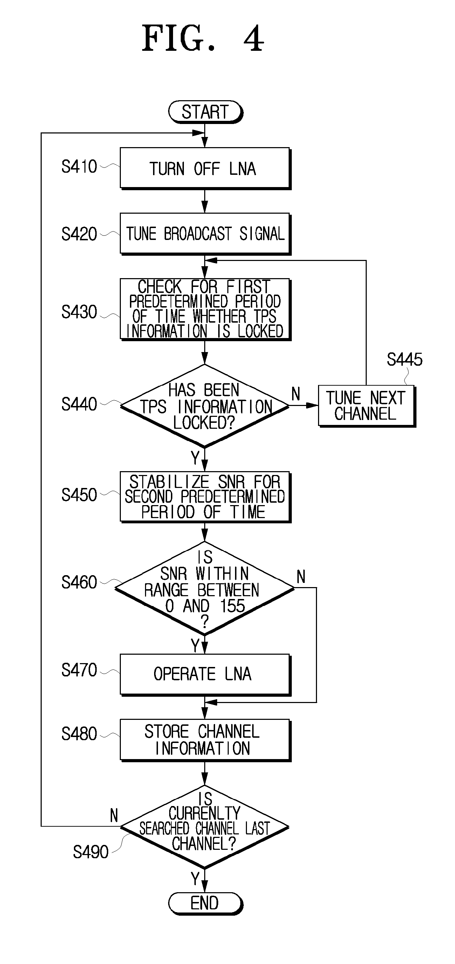

Figure 4 is a flowchart illustrating a method of searching for a digital channel according to another exemplary embodiment of the present invention. Referring to Figure 4, if an automatic digital channel setting command is input from the key input unit 250, the controller 270 controls the LNA 210 to be turned off in operation S410.

In operation S420, the tuner 220 is controlled by the controller 270 to tune a broadcast signal having a frequency of a channel received through an antenna.

In operation S430, the controller 270 checks for a first predetermined period of time whether TPS information of the broadcast signal demodulated by the digital demodulator 230 is locked.

In operation S440, the controller 270 determines whether the TPS information is locked. A method of checking whether the TPS information is locked is the same as the method described in operation S330, and thus its detailed description will be omitted.

If it is determined in operation S440 that the TPS information is not locked, the controller 270 controls the tuner 220 to tune a next channel in operation S445.

Here, the LNA 210 is kept turned off, and the controller 270 returns to operation S430 to control the digital demodulator 230 so as to demodulate a broadcast signal corresponding to the next channel tuned by the tuner 220 and checks for the first predetermined period of time whether TPS information of the demodulated broadcast signal demodulated is locked.

In other words, if it is determined that a currently tuned channel is not a channel through which a digital signal is received, the controller 270 does not perform other operations any more. The controller 270 also controls the tuner 220 to tune a next channel to check whether the next channel is a digital channel so as to reduce a time required to search all channels.

If it is determined in operation S440 that the TPS information is locked, the controller 270 controls the SNR operator 240 to stabilize an SNR for a second predetermined period of time and compute the SNR in operation S450. The second predetermined period of time is a time required to stabilize an SNR of a digital signal received through a channel determined as a digital channel.

In operation S460, the controller 270 determines whether the SNR is within a range between 0 and 155. In detail, if the SNR operator 240 computes an SNR of a broadcast signal demodulated by the digital demodulator 230 and transmits the SNR to the controller 270, the controller 270 determines whether the SNR is within a predetermined range. The range between 0 and 155 is only an example, and the predetermined range is to determine a noise degree of the channel determined as the digital channel and may be arbitrarily set.

If it is determined in operation S460 that the SNR is within the range between 0 and 155, the controller 270 controls the LNA 210 to be turned on in operation S470. In other words, if it is determined that the SNR is within the range between 0 and 155, the controller 270 determines that the digital channel includes much noise and operates the LNA 210 to remove the noise.

In operation S480, the controller 270 stores information regarding the digital channel from which the noise has been removed in the memory 260 in operation S480. If it is determined in operation S460 that the SNR is not within the range between 0 and 155, the controller 270 stores the information regarding the channel determined as the digital channel.

In operation S490, the controller 270 determines whether a currently searched channel is a last channel, all channels have been searched. If it is determined in operation S490 that the currently searched channel is not the last channel, the controller 270 repeats operations S410 through 480 to search for a digital channel among the all channels in order. If it is determined in operation S490 that the currently searched channel is the last channel, the controller 270 ends searching for the digital channel.

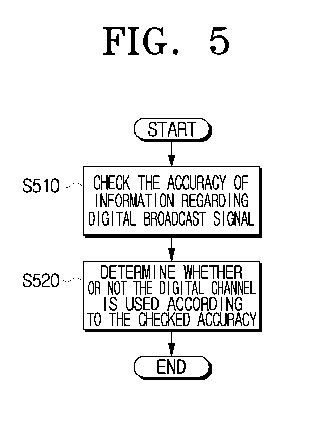

Figure 5 is a flowchart illustrating a method of searching a digital channel of a digital broadcast receiving apparatus according to another exemplary embodiment of the present invention.

Referring to Figure 5, the controller 270 checks the accuracy of the information regarding the digital broadcast signal contained in the broadcast signal in operation S510.

The controller 270 then determines whether the broadcast signal is received through the digital channel or not in operation S520, according to the accuracy of the information regarding the digital broadcast signal.

Accordingly, a determination can be made as to whether analog and digital channel searching information exist to search for analog and digital channels among all channels. Thus, a determination can be made as to whether information regarding a digital broadcast signal for searching for a digital channel exists in consideration of an SNR so as to considerably reduce a time required to search all channels.

Also, reliability of information regarding a digital broadcast signal used to determine whether a currently searched channel is a digital channel is high. Thus, an accuracy of whether the searched channel is a digital channel can be improved. Also, noise can be considered so as to improve an accuracy of a signal received through a channel determined as a digital channel.

As described above, according to the present invention, a time required to search all channels so as to locate one or more digital channels can be considerably reduced. Also, an accuracy of locating a digital channel can be improved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of searching for a digital channel, comprising:
checking an accuracy of information regarding a digital broadcast signal of a broadcast signal; and
determining whether a channel through which the broadcast signal is received is a digital channel through which a digital signal is received, depending on the accuracy of the information regarding the digital broadcast signal.

2. The method of claim 1, wherein the information regarding the digital broadcast signal is transmission parameter signaling (TPS) information.

3. The method of claim 1 or 2, wherein the checking of the accuracy of the information regarding the digital broadcast signal of the broadcast signal comprises checking whether TPS information is locked.

4. The method of claim 3, wherein if a predetermined number of carriers carrying the TPS information are sequentially received within a predetermined period of time, it is determined that the TPS information is locked.

5. The method of claim 4, wherein the predetermined period of time is a time required to read the TPS information and check whether the TPS information is locked.

6. The method of any preceding claim, wherein if it is determined that the accuracy of the information regarding the digital broadcast signal is high, it is determined that the channel through which the broadcast signal is received is the digital channel through which the digital signal is received.

7. The method of claim 6, wherein if it is determined that the TPS information is locked, it is determined that the accuracy of the information regarding the digital broadcast signal is high.

8. The method of any preceding claim, further comprising storing information regarding the channel determined as the digital channel if it is determined that the channel through which the broadcast signal is received is the digital channel through which the digital signal is received.

9. The method of any preceding claim, wherein when the broadcast signal is received, a low noise amplifier (LNA) (210) is turned off.

10. The method of any preceding claim, further comprising:
if it is determined that the channel through which the broadcast signal is received is the digital channel, computing a signal-to-noise ratio (SNR) of the digital channel;
determining whether the SNR is within a predetermined range; and
storing information regarding the channel determined as the digital channel depending on whether the SNR is within the predetermined range.

11. The method of claim 10, wherein the predetermined range is a range which is to determine a noise degree of the channel determined as the digital channel and is arbitrarily set.

12. The method of claim 10 or 11, wherein if it is determined that the SNR is within the predetermined range, the LNA (210) operates to remove noise from the channel determined as the digital channel and stores the information regarding the channel determined as the digital channel.

13. A digital broadcast receiving apparatus comprising:
a digital demodulator (230) to demodulate a broadcast signal; and
a controller (270) to check an accuracy of information regarding a digital broadcast signal of the demodulated broadcast signal and determine whether a channel through which the broadcast signal is received is a digital channel through which a digital signal is received, depending on the accuracy of the information regarding the digital broadcast signal.

14. The digital broadcast receiving apparatus of claim 13, wherein the information regarding the digital broadcast signal is TPS information.

15. The digital broadcast receiving apparatus of claim 13 or 14, wherein the controller (270) checks whether the TPS information is locked to check the accuracy of the information regarding the digital broadcast signal.

16. The digital broadcast receiving apparatus of claim 15, wherein if a predetermined number of carriers carrying the TPS information are sequentially received within a predetermined period of time, the controller (270) determines that the TPS information is locked.

17. The digital broadcast receiving apparatus of claim 16, wherein the predetermined period of time is a time required to read the TPS information and check whether the TPS information is locked.

18. The digital broadcast receiving apparatus of any of claims 13 to 17, wherein if it is determined that the accuracy of the information regarding the digital broadcast signal is high, the controller (270) determines that the channel through which the broadcast signal is received is the digital channel through which the digital signal is received.

19. The digital broadcast receiving apparatus of claim 18, wherein if it is determined that the TPS information is locked, the controller (270) determines that the accuracy of the information regarding the digital broadcast signal is high.

20. The digital broadcast receiving apparatus of any of claims 13 to 19, further comprising a memory (260), wherein the controller (270) stores information regarding the channel determined as the digital channel if it is determined that the channel through which the broadcast signal is received is the digital channel through which the digital signal is received.

21. The digital broadcast receiving apparatus of any of claims 13 to 20, further comprising an LNA (210) removing noise from the broadcast signal, wherein when the broadcast signal is received, the controller (270) turns off the LNA (210).

22. The digital broadcast receiving apparatus of any of claims 13 to 21, further comprising an SNR operator (240) for computing an SNR of the digital channel if it is determined that the channel through which the broadcast signal is received is the digital channel, wherein the controller (270) stores information regarding the channel determined as the digital channel depending on whether the SNR is within a predetermined range.

23. The digital broadcast receiving apparatus of claim 22, wherein the predetermined range is a range which is to determine a noise degree of the channel determined as the digital channel.

24. The digital broadcast receiving apparatus of claim 22, wherein if it is determined that the SNR is within the predetermined range, the controller (270) operates the LNA (210) to remove noise from the channel determined as the digital channel and stores the information regarding the channel determined as the digital channel.

25. The digital broadcast receiving apparatus of claim 21, further comprising a tuner (220) sequentially tuning broadcast signals receives through all channels, wherein the controller (270) controls the tuner (220) to tune the all channels when the LNA (210) is turned off.

26. The digital broadcast receiving apparatus of claim 25, wherein if it is determined that the channel through which the broadcast signal is received is the digital channel, the controller (270) controls the tuner (220) to tune a next channel.
